# EUROPÄISCHE PATENTANMELDUNG

(11) **EP 2 184 848 A2**
(43) Veröffentlichungstag der Anmeldung: **12.05.2010**
(21) Anmeldenummer: 09174822.8
(22) Anmeldetag: 02.11.2009
(51) Int. Cl.: H02P 21/04

(54) **Steuerungssystem und Steuerungsverfahren zum geberlosen Betrieb von Asynchronmaschinen**

(30) Priorität: 31.10.2008 DE 102008054197
(71) Anmelder: Lenze Drives GmbH, 32699 Extertal (DE)
(72) Erfinder: Hahn, Hartmut, 31789 Hameln (DE)
(74) Vertreter: Fricke, Joachim

(57) **Zusammenfassung**

Das Steuerungssystem und Steuerungsverfahren verwenden zwei Steuer- und Regelkonzepte, die unabhängig voneinander auf einfache Weise in Betrieb zu nehmen sind. Die Übergänge (7) zwischen der Strom-Vektorregelung und der U/f-Kennliniensteuerung sind so ausgeführt, dass Ausgleichsvorgänge weitestgehend vermieden werden. Durch die Stromregelung im Drehzahlbereich um Null herum wird eine Maximallast abhängig vom Stromsollwert sicher beherrscht. Eine Überdimensionierung der Maschine (4) ist nicht mehr erforderlich.

## Beschreibung

Die Erfindung bezieht sich auf ein Steuerungssystem und ein Steuerungsverfahren zum Betreiben von geberlosen Asynchronmaschinen, das sowohl für Standardanwendungen als auch besonders gut für Hebezeuge (Hubwerke) eingesetzt werden kann.

Als abstraktere Aufgabe sollen Ausgleichsvorgänge weitestgehend vermieden werden, so dass die Last bis zu einem bestimmten Maximalwert sicher beherrscht wird. Eine deutliche Überdimensionierung des Antriebs soll nicht erforderlich sein. Die Anpassung an den jeweiligen Einsatzfall soll auf einfache Weise erfolgen.

Betreibt man eine geberlose Asynchronmaschine im Stand der Technik in der Nähe des Stillstands, kann man aus der Stromaufnahme des Motors nicht mehr auf die aktuelle Belastung schließen. Soll der Antrieb im Stillstand oder bei einem Drehrichtungswechsel die vorhandene Last sicher beherrschen, muss im Drehzahlbereich um Null immer so viel Motorstrom vorhanden sein, dass auch die Maximallast den Antrieb nicht zum Kippen bringen kann (Kippmoment der DAM).

Für geberlose Antriebe gibt es eine Vielzahl von Verfahren. Die meisten können als Varianten der U/f-Kennliniensteuerung (VFC) und der geberlosen Vektorregelung (SLVC, Sensorless Vector Control) betrachtet werden. Auch gibt es eine Reihe von Lösungsansätzen wie man im Drehzahlbereich um Null die Drehzahl des Läufers bzw. die Orientierung des Flusses identifizieren kann.

Bei der VFC mit einstellbarer Spannungs-Frequenz-Kennlinie ist der Motorstrom im Drehzahlbereich um Null sehr stark von der Erwärmung und der Belastung des Antriebs abhängig. Das macht eine deutliche Überdimensionierung des Antriebs erforderlich.

Eine unterlagerte Stromregelung, so wie sie bereits als Spannungs-Vektorregelung zur Verfügung steht, beseitigt zwar diesen Effekt, ist aber regelungstechnisch nur bedingt stabil zu bekommen. Je größer die Motorleistung dabei ist, umso schwieriger ist es, die Last sicher zu beherrschen.

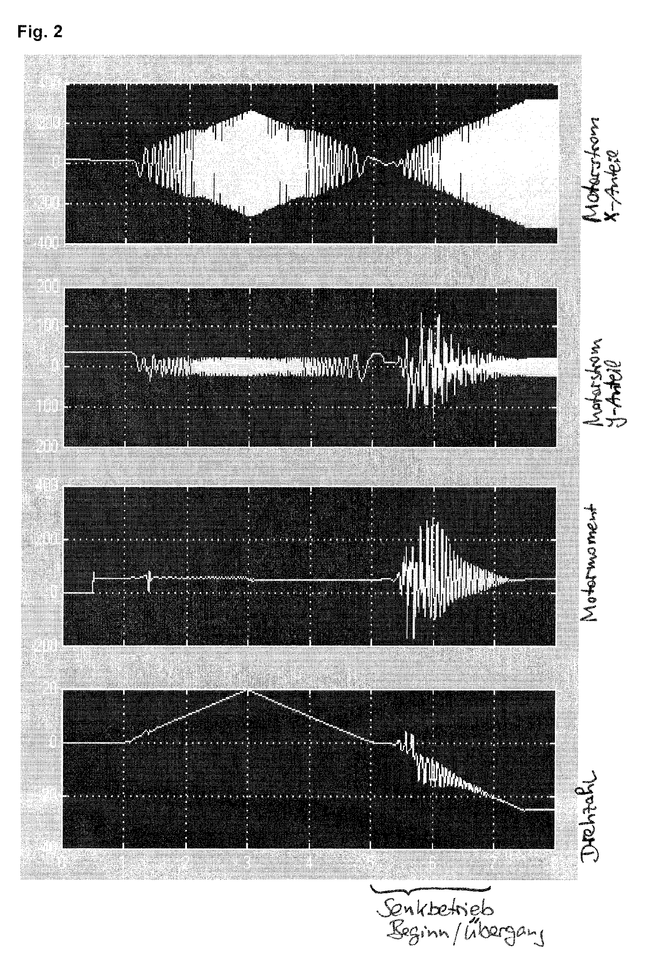

**Figur 2** (als Simulationsergebnisse) veranschaulicht die Stabilitätsprobleme, die bei einer U/f-Kennliniensteuerung mit unterlagerter Spannungs-Vektorregelung, insbesondere beim Übergang in den Senkbetrieb auftreten können (im Beispiel des Hubwerks/Hebezeugs).

Die vektorgeregelten Verfahren des Stands der Technik verwenden meist Motormodelle, die zunehmend fehlerhaft werden, wenn der generatorische Betrieb bei niedriger Drehzahl (bei einer Ausgangsfrequenz von im Wesentlichen 0 Hz) länger andauert. Werden die Fehler zu groß, wird die gesamte Regelung instabil. Zusätzliche Maßnahmen zur Identifizierung der Motordrehzahl oder der Flussorientierung sind mit erheblichem Aufwand verbunden. Häufig muss der Motor bestimmte Voraussetzungen erfüllen, auch gibt es Rückwirkungen auf das Antriebsverhalten.

Der Erfindung liegt deshalb **die konkrete Aufgabe zugrunde**, im ersten, niedrigen Drehzahlbereich "um Null" den für eine bestimmte Maximallast erforderlichen Motorstrom so einzuprägen, dass Instabilitäten nicht auftreten können und die Übergänge zwischen der Strom-Vektorregelung und der U/f-Kennliniensteuerung so ausgeführt werden, dass Ausgleichsvorgänge weitestgehend vermieden werden können, damit auch bei großen Antrieben alle Lasten bis zum Maximalwert ohne deutliche Überdimensionierung des Antriebs und ohne aufwendige Inbetriebnahme sicher beherrscht werden.

Diese Aufgabe wird mit einer Schaltung zur Steuerung mit den Merkmalen des Patentanspruches 1 oder 11 gelöst. Diese Aufgabe wird auch mit einem Steuerungsverfahren mit den Merkmalen des Patentanspruches 4 oder 10 gelöst.

Für die erfindungsgemäße Lösung ist zielführend, dass die geberlose Maschine als "Antrieb" im Drehzahlbereich um Null in orthogonalen Komponenten stromgeregelt betrieben wird (Strom-Vektorregelung) und jeder Wechsel zwischen der Strom-Vektorregelung und der U/f-Kennliniensteuerung so gestaltet ist, dass die Motorspannung beim Umschalten/Wechseln weder im Betrag noch in der Phasenlage einen Sprung ausführt. Eine dafür verwendete Betragsanpassung wird danach zeitgesteuert abgebaut, während die Phasenkorrektur erhalten bleibt.

Ausgangspunkt des vorgeschlagenen Verfahrens ist die Behandlung der Klemmengrößen des Motors (Spannungen und Ströme) in Form von orthogonalen Komponenten (Real- und Imaginäranteil) in einem Koordinatensystem, das mit der Ständerfrequenz rotiert (a-b-Koordinatensystem).

Die Umrechnung zwischen den im stationären Betrieb im a-b-System stillstehenden "Zeigern" oder Skalaren und den im Ständer-Koordinatensystem mit Ständerfrequenz rotierenden Zeigern (im x-y-System) erfolgt jeweils über Drehtransformationen durch Multiplikation mit e^{j2π*f*t} b_{zw}. mit ₑ-j^{j2π*f*t}.

Im Drehzahlbereich um Null (im Bereich von ca. ± 10% der Nenndrehzahl) wird der Antrieb stromgeregelt betrieben (Strom-Vektorregelung). Die maximale Stromhöhe ist vom Anwender festzulegen und ergibt sich aus der im Betrieb maximal zu erwartenden Belastung des Antriebs (Anspruch 3, Anspruch 13).

Verlässt der Antrieb diesen Bereich wird in die U/f-Kennliniensteuerung gewechselt (Anspruch 8, Anspruch 9). Die Wechsel zwischen der Strom-Vektorregelung und der U/f-Steuerung erfolgen jeweils so, dass Ausgleichsvorgänge weitestgehend vermieden werden.

In der U/f Kennliniensteuerung kann sich der Motorstrom entsprechend der aktuellen Belastung frei einstellen (Anspruch 6).

Der Übergang von der Stromregelung auf die Spannungssteuerung (Anspruch 8) wird so vollzogen, dass es zunächst weder in der Amplitude noch in der Phasenlage der Ausgangspannung einen Sprung gibt. Hierzu wird der Sollspannungsvektor, der sich wie oben beschrieben aus der Kennlinie ergibt, um den (oder auf den) Winkel korrigiert, den gerade der Sollspannungsvektor der Stromregelung aufweist und betragsmäßig um die Differenz der beiden Zeiger bevorzugt angehoben. Nach dem Umschalten auf die U/f-Steuerung wird die Differenz zeitgesteuert eliminiert oder abgebaut.

Der Übergang von der Spannungssteuerung (zurück) auf die Stromregelung (Anspruch 9) erfolgt wieder so, dass es weder in der Amplitude noch in der Phasenlage der Ausgangspannung einen Sprung gibt. Hierzu werden zum einen die IAnteile der Stromregler mit den aktuellen Motorspannungs-Sollkomponenten initialisiert und zum anderen der Sollstromvektor um den (oder auf den) Winkel korrigiert, den gerade der Iststrom-Vektor aufweist. Außerdem wird der Sollstromvektor betragsmäßig um die Differenz bevorzugt reduziert. Nach dem Umschalten auf die Stromregelung wird die Differenz zeitgesteuert eliminiert oder abgebaut.

Für die Zuverlässigkeit des Verfahrens ist es von Bedeutung, dass der Motorstrom durch die Regelung in orthogonalen Komponenten im Drehzahlbereich um Null quasi eingeprägt wird. Der Motor kann damit bis zu einer - vom Anwender - festgelegten Stromhöhe sicher belastet werden. Außerdem werden beim Wechseln zwischen Stromregelung und Kennliniensteuerung Ausgleichsvorgänge weitestgehend vermieden. Damit ist eine deutliche Überdimensionierung des Antriebs nicht mehr erforderlich.

Die Anpassung der Stromregelung und der Kennliniensteuerung an den jeweiligen Einsatzfall erfolgt über wenige Parameter auf sehr einfache Weise. Expertenwissen ist nicht mehr erforderlich.

Weitere vorteilhafte Ausgestaltungen ergeben sich aus den abhängigen Ansprüchen. Bevorzugt werden vom Antrieb Hubwerke angetrieben (Anspruch 16).

Die in den allgemeinen Ansprüchen als niedrige oder höhere Drehzahl genannten Bereiche sind nicht unbestimmt. Sie orientieren sich am Anwendungsfall und der geforderten Rundlaufgüte. Im Allgemeinen liegt der niedrige Bereich zwischen ±10% der Nenndrehzahl des Antriebs (Anspruch 13, Anspruch 14). Daraus bestimmt sich der Schwellenwert für das Umschalten bzw. den Wechsel (Anspruch 10). Bei höherer Rundlaufgüte (=besseres Rundlaufverhalten) kann die Schwelle auch höher liegen.
Die gemachten Zahlenangaben sind Circa-Werte.

Die Erfindung wird nachfolgend anhand der Zeichnung an mehreren Schaltungs**beispielen** und Verfahren näher erörtert. Dabei zeigen
- Fig. 1: das Blockdiagramm eines Steuerungssystems mit Strom-Vektorregelung bei f < f_{Wechsel} und U/f-Kennliniensteuerung bei f > f_{Wechsel}.
- Fig. 2: Simulationsergebnisse einer U/f-Kennliniensteuerung mit unterlagerter Spannungs-Vektorregelung (Stand der Technik).
- Fig. 3: Simulationsergebnisse mit Stromvektor-Regelung und U/f-Kennliniensteuerung (nach einem Beispiel der erfindungsgemäßen Steuerung gemäß Figur 1).
- Fig. 4: weitere Simulationsergebnisse zu den Beispielen.
- Fig. 5: weitere Simulationsergebnisse zu den Beispielen.
- Fig. 6: weitere Simulationsergebnisse zu den Beispielen.

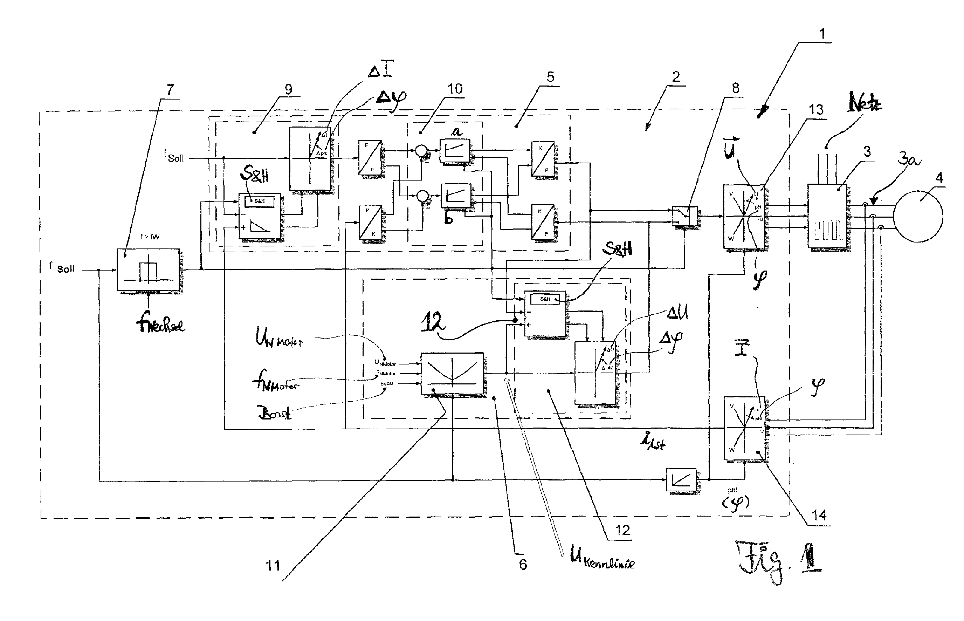

**Figur 1** ist ein Blockdiagramm des Steuerungssystems 1 als ein Beispiel der Erfindung, das einen Frequenzumrichter 3 und einen Asynchronmotor 4 als Antrieb enthält. Es übt auch ein Beispiel des vorgeschlagenen Steuerverfahrens 2 aus.

Das Steuerverfahren 2 ist eine Folge von dargestellten Schritten, die in einem Controller ausgeführt werden. Das Haupteingangssignal des Steuerungssystems ist ein Frequenzsollwert f_{Soll}, der proportional zur gewünschten Antriebsdrehzahl von einer übergeordneten Steuerung vorgegeben wird. Die zweite Eingangssgröße ist der Stromsollwert I_{Soll}, mit dem der Antrieb im Drehzahlbereich um Null stromgeregelt betrieben wird.

Das Steuersystem 1 besteht aus dem Block 5 zur Steuerung bei niedriger Drehzahl, aus dem Block 6 zur Steuerung bei hoher Drehzahl, aus einer Übergangserkennung 7 und dem Übergangsschalter 8 zwischen dem Block 5 zur Steuerung bei niedriger Drehzahl und dem Block 6 zur Steuerung bei hoher Drehzahl, aus dem Block 9 zur Winkel und Amplitudenanpassung und dem Block 10 zur Stromregelung bei niedriger Drehzahl, aus der U/f-Kennlinie 11 und dem Block 12 zur Winkel- und Amplitudenanpassung zur Spannungssteuerung bei hoher Drehzahl, aus dem Block 13 zur Drehtransformation der Ausgangsspannung und dem Block 14 zur Rücktransformation der Motorstromsignale für die Stromregelung bei niedriger Drehzahl.

Die Maschine 4, die im Beispiel als Asynchronmaschine DAM eingesetzt wird, besitzt eine Strommessung 3a. Die hier gemessenen Motorströme werden über eine Rücktransformation 14 als Sollwert iᵢₛₜ dem Steuerungssystem 1 zur Verfügung gestellt. Die Spannung der als Antrieb bezeichneten Asynchronmaschine 4 wird von einem Frequenzumrichter 3 vorgegeben, der aus einem Netz gespeist wird. Er wird von einer Drehtransformation der Ausgangsspannung 13 angesteuert. Die Eingangsgröße der Drehtransformation 13 wird von einem Schalter bereitgestellt. Der Schalter 8 schaltet entweder die Stromregelung aktiv oder schaltet die Spannungssteuerung aktiv, welche durch die Funktionsblöcke 5 und 6 dargestellt sind.

Zum allgemeinen Verständnis soll hier beigetragen werden, dass der Begriff des "Blocks" funktionell verstanden werden soll. Ein Block kann entweder einen oder mehrere Funktionsschaltungen enthalten, die jeweils durch eine gegebene Funktion vorgegeben sind. Der Block steht mithin für eine Funktion oder ein Verhalten. Zumindest eine Schaltung soll kurz als Block benannt werden. Gleichermaßen spricht der Fachmann hier von einer Funktion, so dass der Block zur Rücktransformation und der Block zur Drehtransformation funktionell verstanden die Rücktransformation als solches und die Drehtransformation zum Frequenzumrichter 3 hin ausbilden. Dies kann entweder schaltungstechnisch durch Hardware oder programmtechnisch durch Software gelöst werden.

Der Frequenzumrichter 3 kann bevorzugt als Wechselrichter ausgebildet sein. Er stellt ein 3-Phasen-System zur Verfügung, welches dem Motor die Motorspannung vorgibt. Unter der Ägide der Stromregelung 5 im niederen Drehzahlbereich, also unterhalb von ±10% der Nenndrehzahl in bevorzugten Ausführungsbeispielen, bevorzugt bei Hubzeugen oder Hebezeugen, wird der Strom so vorgegeben, wie der Regler ihn freigibt (vorgibt). Dies bis zu einer fest eingestellten Obergrenze, die von Benutzerhand - orientiert am Anwendungszweck - voreingestellt wird. Unter der Ägide der Spannungssteuerung nach der Funktion oder dem Funktionsblock 6, umgeschaltet durch den Umschalter 8, wird ein Spannungssignal an den Motor angelegt, wobei der Strom sich im Motor frei ausbilden kann, wie die Last ihn verlangt.

Die Begriffe "hoch" oder "niedrig" werden hier im Folgenden weiter verwendet, weil der Fachmann unter der Angabe ausreichend genau versteht, dass ein niederer Drehzahlbereich, einerseits gemeint ist, der andererseits auch mit "um Null herum" benannt werden könnte. Die Frequenzbereiche schließen sich aus, so dass eine eindeutige Steuerung gegeben ist. Befindet sich die Drehzahl im höheren Drehzahlbereich, ist auszuschließen, dass sie sich im niederen Frequenzbereich befindet und andersherum.

Für den Betrieb der geberlosen Asynchronmaschine 4 werden abhängig vom Frequenzsollwert bei niedriger Drehzahl die Strom-Vektorregelung 5 und bei hoher Drehzahl die U/f-Kennliniensteuerung 6 eingesetzt. Die höhere Frequenz ist höher (betragsmäßig) als die niedere Frequenz, bspw. größer als +10% und kleiner als -10% der Nenndrehzahl des Antriebs 4.

Die Vorgabe des Stromsollwertes I_{Soll} erfolgt in Form eines Vektors, der nur einen Realanteil hat. Der Soll-Imaginäranteil ist Null. Rück-transformierte Ständerstrom-Istwerte werden mit diesen Sollwerten verglichen. Die Regelabweichungen werden den orthogonal zugeordneten Motorstromreglern a und b zugeführt. Die Stellgrößen der Regler bilden den Soll-Motorspannungsvektor, der bei der niedrigeren Drehzahl drehtransformiert über den Frequenzumrichter 3 ausgegeben wird. Durch die orthogonale Regelung 10 der Ständerströme können Stromeinbrüche oder Stromüberhöhungen, so wie sie bei Laständerungen bei bekannten Verfahren möglich sind, kaum mehr auftreten.

Eine über die Spannungsfrequenz-Kennlinie 11 des Asynchronmotors 4 ermittelte Sollspannung bildet ebenfalls einen Soll-Spannungsvektor ohne Imaginäranteil. Damit sich der Motorstrom frei einstellen kann, wird dieser Sollspannungsvektor bei der höheren Drehzahl nur drehtransformiert über den Wechselrichter 3 ausgegeben. Dies bei umgeschaltetem Schalter 8.

Beim Übergang/Wechsel von der Strom-Vektorregelung 5 zur U/f-Kennliniensteuerung 6 wird mit dem Block 12 zur Winkel- und Amplitudenanpassung der Soll-Spannungsvektor, der sich wie oben beschrieben aus der Kennlinie ergibt, um den Winkel korrigiert, den gerade der Soll-Spannungszeiger der Stromregelung aufweist und betragsmäßig um die Differenz der beiden Zeiger angehoben.

Nach dem Umschalten auf die U/f-Steuerung wird die betragsmäßige Differenz zeitgesteuert eliminiert/abgebaut.

Der Übergang/Wechsel von der U/f-Kennliniensteuerung 6 auf die Strom-Vektorregelung 5 erfolgt so, dass zum einen die I-Anteile der Stromregler mit den aktuellen Motorspannungs-Sollkomponenten initialisiert werden, zum anderen wird der Sollstromvektor mit dem Block zur Winkel- und Amplitudenanpassung 9 um den Winkel korrigiert, den gerade der Ist-Stromvektor aufweist und betragsmäßig um die Differenz der beiden Zeiger abgesenkt.

Nach dem Umschalten auf die Stromregelung wird die betragsmäßige Differenz zeitgesteuert abgebaut/eliminiert.

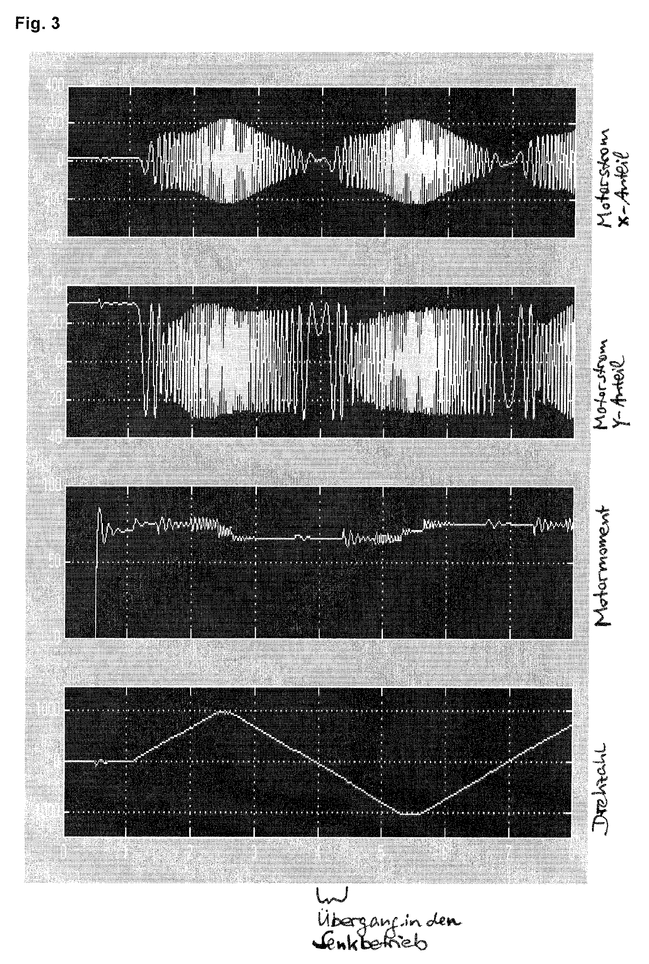

**Figur 3** zeigt nur geringe Drehmomentschwankungen beim Übergang in den Senkbetrieb (Simulationsergebnisse bei dem Verfahren nach dem Beispiel der Erfindung).

Da im Drehzahlbereich mit Strom-Vektorregelung 5 die Totzeiten beim Schalten des Wechselrichters keine Auswirkungen haben, ist im Vergleich zum spannungsgeführten Betrieb ein deutlich besseres Rundlaufverhalten zu erwarten.

Für Anwendungen, bei denen eine hohe Rundlaufgüte gefordert ist, kann der Übergang von der Strom-Vektorregelung 5 auf die U/f-Kennliniensteuerung 6 auch bei einer höheren Drehzahl erfolgen.

Für Antriebe mit vergleichsweise hohem Beschleunigungsmoment kann zur Vermeidung eines dauernd höheren Stromsollwertes auch eine Steuerung des Sollwertes in Abhängigkeit der Beschleunigung eingesetzt werden.

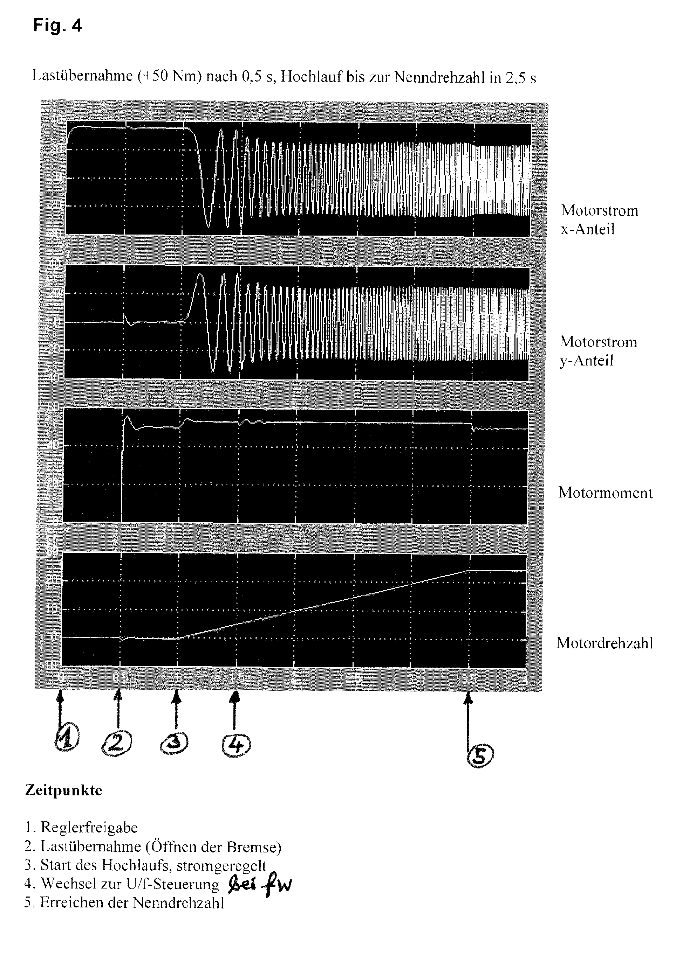

Weitere Simulationsergebnisse veranschaulichen die **Figuren 4 bis 6****.**

Die Drehmomentschwankung beim Übergang in den Senkbetrieb nach Figur 3 ist gering. Gezeigt ist in der unteren Signalaufzeichnung der Verlauf der Drehzahl. Das Lastmoment im zweiten Bild von unten springt bei ca. 0,5 sec und ist dann im weiteren Sinne gleich bleibend, bis zu dem Zeitpunkt, zu dem die Drehzahl beginnt, linear zu fallen, bis hin zum unteren Endwert -1000. Die Drehzahl ist hier in beiden Richtungen mit +/- aufgetragen. Der Senkbetrieb beginnt nach dem Nulldurchgang.

So auch die weiteren Beispiele der Figuren 4 bis 6. Auch in diesen Figuren ist das jeweils untere Diagramm der Drehzahlverlauf. Der Drehzahlverlauf ist weiter repräsentiert durch ein Signal zwischen 0 und 25. Diese beiden Grenzwerte symbolisieren den Stillstand und die Nenndrehzahl. Gezeigt ist in allen drei Beispielen ein Hochlauf bis zur Nenndrehzahl. Dieser wird bei jeweils dem Zeitpunkt (5) erreicht, repräsentiert durch die Nenndrehzahl mit einem normierten Wert von 25. Die Nenndrehzahl kann von der Anwendung und vom Motortyp abhängen.

Die verschiedenen Lastzustände sind in den Figuren 4 bis 6 wie folgt gestaltet. Bei Figur 4 wird eine Lastübernahme von +50 Nm nach anfänglich 500 ms vorgenommen, und zwar beim Öffnen der Bremse. Dann übernimmt der Motor mit einem Sprung im Motormoment von 0 auf oberhalb von 50 Nm die Last. Die Drehzahl wird kurzzeitig negativ, stabilisiert sich dann aber durch den Eingriff des Motormoments erneut auf einem Stillstand. Der Zeitpunkt der Lastübernahme ist (2). Dies ist bei 500 ms. Der Hochlauf des Motors mit steigender Drehzahl startet bei (3). Im den Diagrammen ist dies bei 1 ms. Entsprechend bildet sich der Läuferstrom als Motorstrom mit beiden Komponenten aus, wie er vom Regler 10 der Figur 1 vorgegeben wird. Das Motormoment ist weiterhin hoch, es ist etwas höher als das für die Lastübernahme erforderliche Motormoment, um den Hochlauf des Motors zu veranlassen. Kurzzeitige Ausgleichsvorgänge sind jeweils an Einschwingvorgängen zu erkennen, so auch zum Zeitpunkt (4), wenn ein Wechsel von der Stromsteuerung (5), die zwischen dem Zeitpunkt (1) bis (4) einwirkte, auf die U/f-Steuerung nach dem Zeitpunkt (4) stattfindet. Dieses Umschalten erfolgt bei der Schwelle, f_{w}, respektive auch f_{wechsel} wie es die Übergangserkennung zur Umschaltung der Steuerungsblöcke 5 und 6 in Figur 1 links im Bild zeigt. Diese Übergangserkennung 7 schaltet den Schalter 8 um, der in der Figur 1 noch für die Stromsteuerung aktiv ist, welche über die Drehtransformation 13 den Frequenzumrichter 3 für den Asynchronmotor 4 speist, in einen Zustand, bei dem der Schalter 8 umgelegt ist und die Spannungssteuerung, ausgehend von der Kennlinie 11, über die Drehtransformation auf den Frequenzumrichter einwirkt. Diese Kennliniensteuerung ist bis zu dem Zeitpunkt (5) aktiv und darüber hinaus, nur endet der gezeigte Hochlauf bei der Nenndrehzahl.

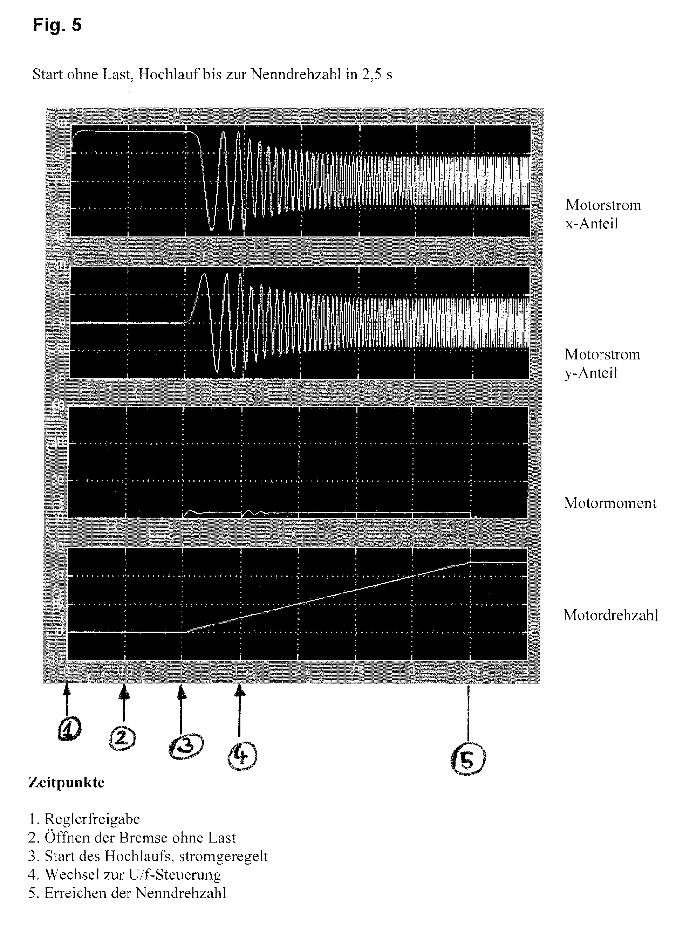

In entsprechender Überlegung zeigen die Figuren 5 vergleichbare Signalverläufe. Hier wird ohne Last gearbeitet, also beginnt der Regler bei (1) zu arbeiten. Die Bremse wird bei (2) geöffnet aber es findet sich keine Last, so dass auch der das Motormoment bildende Laststrom nicht schon hier ausgebildet wird, sondern erst zum Zeitpunkt (3), wenn der Hochlauf noch stromgeregelt beginnt. Zum Zeitpunkt (4) wechselt die Übergangserkennung (7) in Figur 1 auf die Kennliniensteuerung des Funktionsblocks 6 mit der Spannungs/Frequenz-Kennlinie 11. Es ist im Motormoment ein kleiner Einschwingvorgang zu erkennen, aber bei der Motordrehzahl ein völlig kontinuierlicher Verlauf, ohne sichtbare Einschwingvorgänge. Das Ende des Hochlaufs ist bei der Erreichung der Nenndrehzahl zum Zeitpunkt (5).

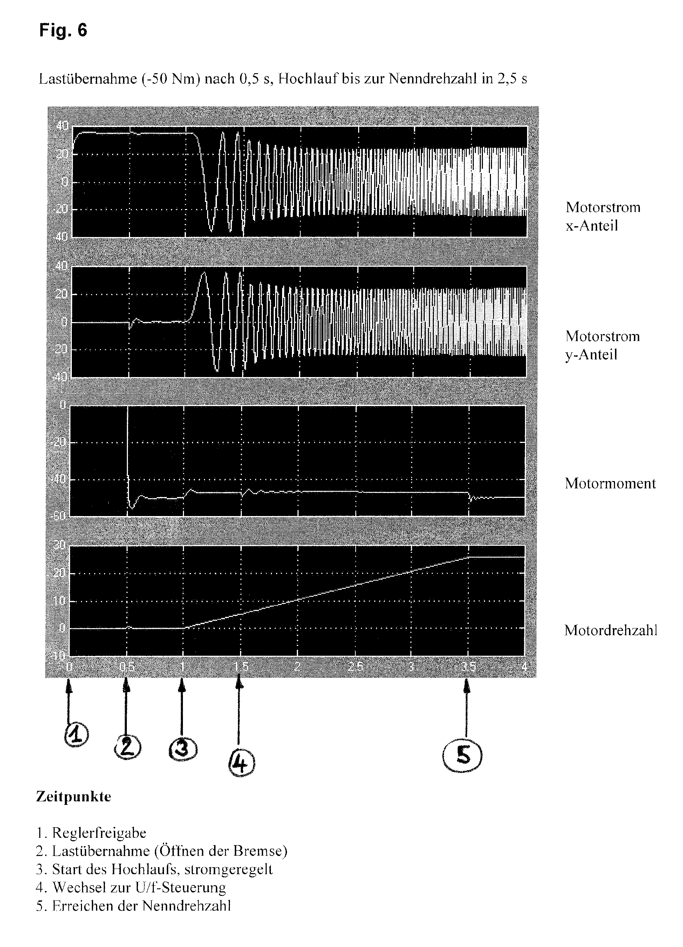

In Figur 6 ist die Lastübernahme so, wie bei Figur 4 nur mit anderen Vorzeichen. Das Motormoment wird zum Zeitpunkt (2) stark negativ, spiegelbildlich zum zweiten Verlauf von unten der Figur 4. Zum Zeitpunkt (2) findet diese Lastübernahme beim Öffnen der Bremse statt.

Der weitere Verlauf bis zum Beginn des Hochlaufs bei (3) und dem Wechsel zur Spannungs/Frequenz-Kennlinie bei (4) sowie bis zum Erreichen der Nenndrehzahl bei (5) zeigt, dass eine hohe Symmetrie der beiden Verläufe nach Figur 4 und 6 erreicht wird. Weiterhin ist ersichtlich, dass keine Drehzahl-Einschwingvorgänge stattfinden, die bei einem Wechsel von der Stromregelung zwischen (1) und (4) in Figur 6 zu der Spannungsregelung nach (4) zu erwarten wären, wenn nicht die Anordnung nach Figur 1 und das zugehörig arbeitende Verfahren diese Einschwingvorgänge ausgleichen würde.

### Bezugszeichenliste (Auszug)

- 1: Block-Diagramm des Steuerungssystems (aus Funktionsblöcken)
- 2: Block-Diagramm des Steuerverfahrens am System 1
- 3: Frequenzumrichter, bspw. ein Wechselrichter
- 3a: Motorstromerfassung, bspw. 3phasig
- 4: Asynchronmotor (im Sinne einer Asynchronmaschine)
- 5: Steuerung bei niedriger Drehzahl (als Block von Funktionsgliedern)
- 6: Steuerung bei hoher Drehzahl (als Block von Funktionsgliedern)
- 7: Übergangserkennung zur Umschaltung der Steuerungsblöcke 5 und 6
- 8: Übergangsschalter zwischen dem Block zur Steuerung bei niedriger Drehzahl und dem Block zur Steuerung bei hoher Drehzahl
- 9: Winkel und Amplitudenanpassung in der Stromregelung mit Block 5
- 10: Orthogonale Regelung der Motorströme mit Motorstromregler a und Motorstromregler b (Funktionsblock 10)
- 11: U/f-Kennlinie (Funktionsblock)
- 12: Winkel- und Amplitudenanpassung in der U/f-Kennliniensteuerung mit Block 6
- 13: Drehtransformation der Ausgangsspannung (Funktionsblock 13)
- 14: Rücktransformation der Motorstromistwerte (Funktionsblock 14)
- K: Kartesisch
- P: Polar

## Patentansprüche

1. **Steuerungssystem** für eine Asynchronmaschinne (4), wobei das System (1) einen Frequenzumrichter (3) zur Erzeugung einer Motorspannung für die und zur Lieferung von Strom an die Asynchronmaschine (4) umfasst, weiter umfassend
- eine Steuereinrichtung (1) zur Steuerung des Frequenzumrichters (3), beinhaltend
- einen Steuerungsblock (5) für niedrige Motordrehzahlen;
- einen Steuerungsblock (6) für hohe Motordrehzahlen;
- eine Übergangserkennung (7) und einen Übergangsschalter (8), um zwischen einer Steuerung bei niedriger Drehzahl und einer Steuerung bei hoher Drehzahl umzuschalten;
- einen Drehtransformations- und einen Rücktransformationsblock (13, 14).

2. Steuerungssystem nach Anspruch 1, wobei der Steuerungsblock (5) bei niedriger Motordrehzahl eine Strom-Vektorregelung (10) enthält, die eine Winkel- und Amplitudenanpassung (9) besitzt.

3. Steuerungssystem nach Anspruch 1 oder 2, wobei der Steuerungsblock (6) bei hoher Motordrehzahl eine U/f-Steuerung beinhaltet, die eine U/f-Kennlinie (11) und eine Winkel- und Amplitudenanpassung (12) umfasst.

4. **Verfahren zum geberlosen Betrieb** eines Antriebs,
- mit einem stromgeregelten Betrieb (5) im niedrigen Drehzahlbereich des Antriebs (4);
- mit einem spannungsgesteuerten Betrieb (6) im hohen Drehzahlbereich, wobei der hohe Bereich nur solche Drehzahlen umfasst, die größer als die niedrigen Drehzahlen sind,
- mit einem Übergang oder Wechsel (7, 8) zwischen dem stromgeregelten Betrieb und dem spannungsgesteuerten Betrieb an einer nach Betrag und Phasenlage angepassten Ausgangsspannung für den Antrieb (4).

5. Verfahren nach Anspruch 4, wobei die Spannungen und Ströme des Antriebs (4) als Real- und Imaginäranteile in einem Koordinatensystem behandelt werden.

6. Verfahren nach Anspruch 4 oder 5, wobei beim stromgeregelten Betrieb (5)
- die Vorgabe eines Stromsollwertes in Form eines Vektors erfolgt, der einen Realanteil hat, wobei ein Soll-Imaginäranteil Null ist;
- transformierte Ständerstrom-Istwerte (3a, 14) des Antriebs mit diesem Stromsollwert-Vektor verglichen und über zugeordnete PI-Regler (a, b) geregelt werden;
- Stellgrößen der PI-Regler (a, b) einen Soll-Motorspannungsvektor bilden, der drehtransformiert (13) über einen Wechselrichter (3) an den Antrieb (4) ausgegeben wird.

7. Verfahren nach einem der Ansprüche 4 bis 6, wobei während dem spannungsgesteuerten Betrieb (6)
- eine über eine Spannungs-Frequenzkennlinie (11) des Antriebs ermittelte Sollspannung einen Soll-Spannungsvektor ohne Imaginäranteil bildet;
- ein drehtransformierter Soll-Spannungsvektor über einen bzw. den Wechselrichter (3) an den Antrieb ausgegeben wird.

8. Verfahren nach einem der Ansprüche 4 bis 7, wobei beim Übergang oder Wechsel ( 8, 7) von dem Betrieb der Stromregelung (5) auf den Betrieb der Spannungssteuerung (6)
- ein Soll-Spannungsvektor, der aus einer bzw. der Kennlinie (11) ermittelt wird, um den Winkel, den der Soll-Spannungsvektor der Stromregelung gerade aufweist, korrigiert wird und betragsmäßig um eine Differenz der beiden Zeiger/Vektoren angepasst, insbesondere angehoben wird (12);
- die betragsmäßige Differenz nach dem Wechsel/Übergang (7, 8) auf den Betrieb mit Spannungssteuerung zeitgesteuert eliminiert oder abgebaut wird.

9. Verfahren nach einem der Ansprüche 4 bis 7, wobei bei einem Wechsel/Übergang (7, 8) von dem Betrieb mit Spannungssteuerung (6) auf den Betrieb mit Stromregelung (5)
- I-Anteile von Stromreglern (a, b) mit aktuellen Motorspannungs-Sollkomponenten initialisiert werden;
- ein bzw. der Sollstromvektor um den oder auf den Winkel, den gerade der Ist-Stromvektor aufweist, korrigiert wird und betragsmäßig um die Differenz der beiden Zeiger/Vektoren angepasst, insbesondere reduziert wird;
- die betragsmäßige Differenz nach dem Umschalten/Wechsel (7, 8) auf die Stromregelung (5) zeitgesteuert abgebaut wird.

10. **Verfahren zum geberlosen Betrieb** von einem Antrieb (4) mit
- einem stromgeregelten Betrieb (5) in einem niedrigen, ersten Drehzahlbereich des Antriebs (4) unterhalb einer ersten Schwelle (f_{wechsel});
- einem spannungsgesteuerten Betrieb (6) in einem hohen, zweiten Drehzahlbereich des Antriebs (4) oberhalb der ersten Schwelle;
- einem Wechsel (7, 8) zwischen dem stromgeregelten Betrieb und dem spannungsgesteuerten Betrieb mit einer nach Betrag und Phasenlage angepassten Ausgangsspannung für den Antrieb (4).

11. **Steuerungssystem** für eine Asynchronmaschine oder zur Ausführung des Verfahrens nach Anspruch 10, welches das Steuerungssystem aufweist
- einen Frequenzumrichter (3) zur Erzeugung einer Motorspannung und zur Lieferung von Strom an die Asynchronmaschine (4);
- eine Steuereinrichtung zur Steuerung des Frequenz-Umrichters (3);
-- eine erste Steuerung (5) für die Steuerung des Frequenz-Umrichters bei niedriger Motordrehzahl;
-- eine zweite Steuerung (6) zur Steuerung des Frequenz-Umrichters bei höherer Motordrehzahl als der niedrigen Motordrehzahl;
- eine Schaltung zur Übergangserkennung (7) und einen Übergangsschalter (8), um zwischen der ersten und der zweiten Steuerung (5,6) umzuschalten;
- eine Schaltungsanordnung zur Drehtransformation (13) und eine Schaltungsanordnung zur Rücktransformation (14).

12. System oder Verfahren nach einem der vorhergehenden Ansprüche, wobei der geberlose Betrieb ein Betrieb ohne Drehzahlgeber ist, bzw. kein Drehzahlgeber vorgesehen ist.

13. Verfahren nach einem der vorhergehenden Verfahrensansprüche, wobei hohe Drehzahlbereich oberhalb von im Wesentlichen ±10% einer Nenndrehzahl des Antriebs (4) liegt, insbesondere die Schwelle (f_{wechsel}) nach Anspruch 10 entsprechend bemessen ist.

14. Steuersystem nach Anspruch 1 oder Anspruch 11, wobei die Übergangserkennung (7) bei im Wesentlichen +10% oder -10% einer Nenndrehzahl des Antriebs (4) anspricht.

15. Verfahren nach Anspruch 4 oder 10, wobei im stromgeregelten Betrieb in dem ersten, niedrigen Drehzahlbereich eine Stromregelung in Abhängigkeit von der Beschleunigung des Antriebs erfolgt.

16. Verfahren oder Schaltung nach einem der vorhergehenden Ansprüche, wobei der Antrieb (4) ein Hubwerk (Hebezeug) steuert.
